# EUROPÄISCHE PATENTSCHRIFT

(11) **EP 3 365 163 B1**
(45) Veröffentlichungstag und Bekanntmachung des Hinweises auf die Patenterteilung: **25.11.2020**
(21) Anmeldenummer: 16774449.9
(22) Anmeldetag: 30.08.2016
(51) Int. Cl.: B29C 70/82, B29C 70/86, B29C 70/88, B29C 65/00, B29C 70/68

(54) **VERFAHREN ZUR HERSTELLUNG EINES FÜR DAS ANSCHWEISSEN EINES METALLBAUTEILS VORBEREITETEN BAUTEILS AUS FASERVERSTÄRKTEM KUNSTSTOFF UND VERWENDUNG**
METHOD FOR PRODUCING A COMPONENT CONSISTING OF A FIBRE-REINFORCED PLASTIC AND PREPARED FOR THE WELDING OF A METAL COMPONENT, AND USE
PROCÉDÉ POUR LA FABRICATION D'UNE PIÈCE PRÉPARÉE À PARTIR DE MATIÈRE PLASTIQUE RENFORCÉE DE FIBRES POUR LE SOUDAGE D'UNE PIÈCE MÉTALLIQUE ET UTILISATION

(30) Priorität: 19.10.2015 DE 102015013402
(43) Veröffentlichungstag der Anmeldung: 29.08.2018
(73) Patentinhaber: Rheinisch-Westfälische Technische Hochschule (RWTH) Aachen, 52062 Aachen (DE)
(72) Erfinder: ESSERS, Marc, 52072 Aachen (DE); GINTROWSKI, Gregor, Georg, 52068 Aachen (DE); LOTTE, Jens, 52068 Aachen (DE); REISGEN, Uwe, Prof. Dr. Ing., 52249 Eschweiler (DE); SCHIEBAHN, Alexander, 52379 Langerwehe (DE)
(74) Vertreter: Cohausz Hannig Borkowski Wißgott
(86) Internationale Anmeldenummer: PCT/EP2016/001459
(87) Internationale Veröffentlichungsnummer: WO 2017/067623

(56) Entgegenhaltungen:
- EP-A2- 0 447 199
- FR-A1- 2 998 210
- US-A1- 2009 087 259
- US-A1- 2014 017 074
- US-A1- 2015 098 755

## Beschreibung

Die Erfindung betrifft ein Verfahren zur Herstellung eines für das Anschweißen eines Metallbauteils vorbereiteten Bauteils aus faserverstärktem Kunststoff, welches wenigstens ein mit einer Kunststoffmatrix getränktes Faserelement umfasst, wobei wenigstens ein metallischer Fügepartner in ein Faserelement zumindest bereichsweise integriert wird, wobei ein erster Teilbereich des Fügepartners von den Fasern des Faserelementes kontaktierend umgeben wird und ein zweiter Teilbereich des Fügepartners über eine Oberfläche des Faserelementes übersteht oder zumindest in der Oberfläche liegt und der Fügepartner an die flüssige und erhärtende Kunststoffmatrix zumindest mit dem ersten Teilbereich angebunden wird.

Ein solches Verfahren ist aus der Publikation FR 2 998 210 A1 bekannt. Diese Publikation offenbart einen metallischen Fügepartner, der im Wesentlichen als Metallplatte ausgebildet ist, von dessen einer Seite stiftförmige Vorsprünge in Richtung zu einem Faserelement vorstehen. Die Vorsprünge, die einen spitzen nach vorne insgesamt verjüngenden Verlauf haben, werden in das Faserelement hineingedrückt und durchdringen dieses in Dickenrichtung, wobei durch die verjüngende Ausbildung sichergestellt wird, dass die Fasern, ohne diese zu zerstören, verschoben werden. Die aus dem Faserelement herausstehenden Spitzen der Stifte werden verformt und an dem flächigen Element ein anderes Metallelement durch Schweißen oder durch Verschrauben angefügt.

Weiterhin offenbart es die Publikation US 2014/0017074 A1 in einem Oberflächenbereich eines Faserelementes durch Schlaufenbildung in den Fasern Metallelemente zu integrieren, so dass diese eine Oberflächenverbindung zum Faserelement erzielen und an diesen Schweißverbindungen vorgenommen werden können.

Die Publikation EP 0 447 199 A2 setzt sich mit der Integration von Gittern in einem Faserverbund auseinander.

Die Publikation US 2015/098755 A1 offenbart es zwei Metallelemente über die Dicke eines Faserverbundelementes hinweg mit stiftförmigen Verbindern durch eine Schweißverbindung zu verbinden.

Die Publikation US 2009/0087259 A1 beschreibt eine doppelt überlappende Verbindung zwischen einem Metallbauteil und einem Faserverbundbauteil, bei der die Notwendigkeit besteht, das Faserverbundbauteil beidseits über die Stifte der Metallplatte herüber zu stecken.

Im Stand der Technik ist es weiterhin bekannt in einer Vielzahl von Anwendungen Bauteile aus faserverstärktem Kunststoff zu verwenden. Es handelt sich hierbei regelmäßig um mit einer Kunststoffmatrix (z.B. Thermoplast oder Duroplast, wie z.B. Epoxydharz) getränkte Faserelemente (z.B. Glasfaser, Kohlefaser etc.) die vor den Tränken in die gewünschte Bauteilform gebracht werden und demnach nach dem Aushärten der Kunststoffmatrix das gewünschte Bauteil ausbilden. Die Faserelemente werden dabei häufig durch Gewebe oder Gelege, insbesondere multiaxiale Gelege der jeweils gewünschten Fasertypen ausgebildet. Typische Anwendungen sind z.B. im KFZ-Karosseriebau oder allgemein dort, wo bei wenig Gewicht hohe Stabilität erforderlich ist.

Trotz der Tendenz in vielen Bereichen metallische Bauteile durch solche aus faserverstärktem Kunststoff zu ersetzen ist es oftmals unumgänglich Verbindungen zwischen Bauteilen aus faserverstärktem Kunststoff und üblichen Metallbauteilen zu schaffen. Ein Anwendungsbereich ist z.B. die Anbindung eines metallischen Türscharniers an eine Karosserie aus faserverstärktem Kunststoff. Beliebige andere Anwendungen sind denkbar und die später beschriebene Erfindung nicht auf dieses Beispiel beschränkt.

Klassische Arten dies zu realisieren sehen z.B. in einfacher Weise vor, das fertige, d.h. getränkte und ausgehärtete Bauteil aus faserverstärktem Kunststoff nachträglich mit Ausnehmungen, z.B. Bohrungen zu versehen um einen Fügepartner für das spätere Metallbauteil am Bauteil aus faserverstärktem Kunststoff zu befestigen, z.B. durch Verschrauben oder Nieten oder auch durch Kleben.

Problematisch ist hierbei, dass durch das Erstellen von Ausnehmungen am fertigen Bauteil das Fasergefüge lokal geschädigt wird und hierdurch eine lokale Schwächung erfolgt, insbesondere an besonders stark beanspruchten Bereichen.

Daher ist es eine Aufgabe der Erfindung ein Verfahren und dafür geeignete Fügepartner bereit zu stellen, mit denen auf einfache Weise ein Bauteil aus faserverstärktem Kunststoff bereit gestellt werden, das vorbereitet ist, um daran eine sehr stabile Anbindung eines Metallbauteiles vornehmen zu können, insbesondere durch metallisch stoffschlüssige Anbindung, wie z.B. durch Schweißen.

Gemäß der Erfindung wird die Aufgabe dadurch gelöst, dass der Fügepartner durch ein flächiges Metallelement gebildet wird, das auf wenigstens einer Seite von der Fläche vorspringende stiftförmige Ankerelemente mit einer endseitigen Verdickung aufweist und zumindest die Ankerelemente den ersten Teilbereich des Fügepartners bilden und in das Faserelement integriert werden und die freien Ankerenden durch die Dicke des Faserelementes hindurchreichen und auf dessen anderen Seite über die Oberfläche vorstehen der zumindest in dieser enden und die Verdickungen den zweiten Teilbereich bilden, an dem ein Metallbauteil durch Schweißen anfügbar ist.

Somit ist es ein wesentlicher Gedanke der Erfindung den metallischen Fügepartner, an den später ein Metallbauteil stoffschlüssig, insbesondere durch Schweißen angefügt werden kann, als integralen, insbesondere untrennbaren Bestandteil des fertigen faserverstärkten Bauteiles auszubilden, was dadurch erfolgt, dass der Fügepartner zumindest teilweise in oder zwischen die Fasern des Faserelementes (z.B. Gewebematte oder Gelegematte) positioniert wird und die Fasern durch den Fügepartner kontaktiert werden. Z.B. können die Fasern den Fügepartner oder zumindest Bereich desselben umgeben, umschlingen oder durch Ausnehmungen in diesem hindurchgeführt werden.

Zum Zeitpunkt der Integration des Fügepartners in ein Faserelement sind somit dessen Fasern noch beweglich, also die Fasern bzw. das Faserelement noch gänzlichst ungetränkt, oder - falls getränkt - die Kunststoffmatrix zumindest noch nicht ausgehärtet.

Die Integration erfolgt bevorzugt so, dass die Fasern hierbei nicht geschädigt werden, insbesondere also nicht durchtrennt oder geknickt werden. Bevorzugt können die Fügepartner dafür so ausgebildet sein, dass diese bei der Integration bereits in Form gelegte Fasern allenfalls aus der ursprünglichen Lage verschieben, insbesondere so, dass diese sich an Bereiche des Fügepartners anschmiegen oder alternativ werden die Fasern des Faserelementes aktiv an den Fügepartner angelegt, z.B. sogar durch diesen hindurchgelegt, wofür der Fügepartner auch Ausnehmungen aufweisen kann.

Eine bevorzugte Ausführung des Verfahrens sieht vor, dass der Fügepartner in das Faserelement zumindest bereichsweise integriert wird zu einem Zeitpunkt, wenn dieses noch ungetränkt ist und erst hiernach die Tränkung und Aushärtung erfolgt.

Durch das erfindungsgemäße Verfahren wird erreicht, dass der Fügepartner auch stoffschlüssig, nämlich durch Stoffschluss mit der Kunststoffmatrix in das Bauteil integriert wird. Eine auf den Fügepartner (z.B. nach Anfügen eines Metallbauteils) wirkende Kraft wird somit direkt auch auf die Kunststoffmatrix und die Faser übertragen. Der in die Matrix eingebundenen und an diese angebundene Fügepartner wirkt im Prinzip auch selbst als Verstärkungselement der Kunststoffmatrix. Die im Stand der Technik erzeugte Schwächung wird dadurch vermieden.

Der Fügepartner weist, zumindest nachdem das Bauteil fertig erstellt ist, einen ersten Teilbereich auf, der integral in das Bauteil aufgenommen ist und einen zweiten Teilbereich auf, der dafür vorgesehen ist, an diesem ein Metallbauteil anzugfügen durch Schweißen. Dieser zweite Teilbereich liegt dafür zumindest in der Oberfläche des Faserelementes bzw. bevorzugt steht er darüber hinaus.

Eine Ausführung kann vorsehen, dass ein insbesondere ungetränktes Faserelement beidseitig von zwei Fügepartnern eingeschlossen wird und die beiden Fügepartner durch die Dicke des Faserelementes hindurch miteinander in Kontakt gebracht werden. Kontaktieren können sich diese z.B. durch jeweils von einem Fügepartner in Richtung des anderen vorspringende Bereiche, die sich gegenüberliegen und durch die Faserelementdicke hindurch berühren. Eine Verbindung kann z.B. durch Widerstandsschweißen erfolgen, insbesondere durch einen Strom der durch die sich berührenden Bereiche geleitet wird. In allen Fällen erfolgt hier das Verbinden vor dem Tränken.

Die Erfindung sieht vor, dass der Fügepartner durch ein flächiges Metallelement, insbesondere eine Metallplatte gebildet wird, die auf wenigstens einer Seite von der Fläche vorspringende stiftförmige Ankerelemente mit einer endseitigen Verdickung aufweist und zumindest die Ankerelemente einen ersten Teilbereich des Fügepartners bilden und in das Faserelement integriert werden, insbesondere durch Einstecken der Ankerelemente in Dickenrichtung in das Faserelement. Erfindungsgemäß reichen die freien Ankerenden durch die Dicke des Faserelementes hindurch und stehen auf dessen anderen Seite über die Oberfläche vor oder enden zumindest in dieser, so dass diese Verdickungen als zweiter Teilbereich dienen, an den ein Metallbauteil durch Schweißen angefügt werden kann, in diesem Fall bevorzugt durch Widerstandsbuckelschweißen. Bevorzugt sind in einem solchen Fall die Enden der Ankerelemente, insbesondere deren Verdickungen nach außen hin, also auf das zukünftige Metallbauteil zu ballig oder zumindest verjüngend ausgebildet, so dass diese Enden als Schweißbuckel fungieren können.

Eine andere Ausführung kann auch vorsehen, dass der flächige Teil des Fügepartners in das Faserelement integriert wird, insbesondere beidseitig von Fasern kontaktierend umgeben wird, bevorzugt bei mittiger Anordnung bezogen auf die Dicke des Faserelementes und sich die Ankerelemente in Dickenrichtung vom flächigen Teil in die Richtung zur Oberfläche des Faserelementes erstrecken und in oder über der Oberfläche enden und die freien Ankerelement-Enden den zweiten Teilbereich ausbilden. Eine solche Ausführung kann besonders bevorzugt in Verbindung mit Fasergelegen eingesetzt werden oder zwischen zwei Fasergeweben positioniert werden.

Bei einem Fügepartner der vorgenannten Art können die bevorzugt stiftförmigen Ankerelemente ursprünglich separate Elemente sein, die an eine Platte angefügt wurden, z.B. selbst durch Schweißen. Es kann aber auch vorgesehen sein, dass die Ankerelemente durch in der Fläche des Fügepartners durch Stanzen oder Schneiden umgrenzte Bereiche gebildet sind, die aus der Flächenebene herausgebogen sind.

Bevorzugte Ausführungsformen der Erfindung werden nachfolgend beschrieben.

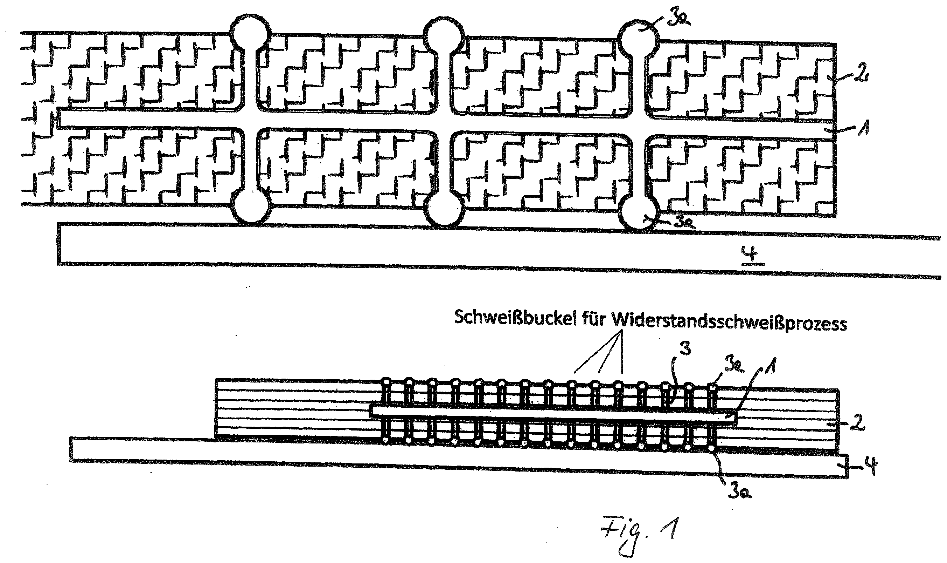

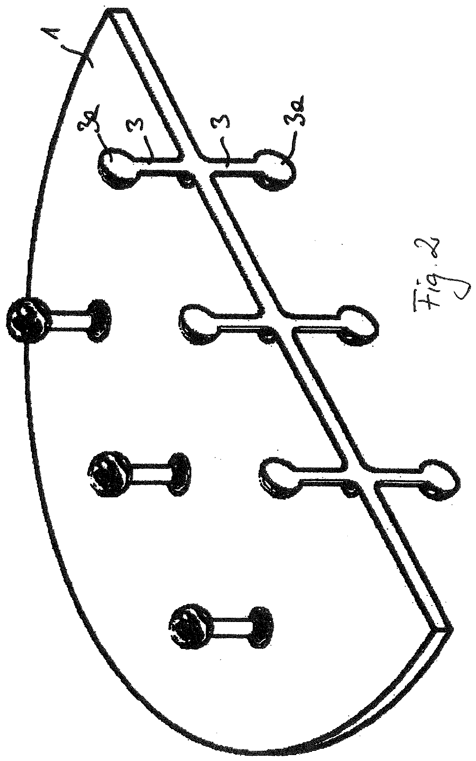

Figur 1 zeigt eine Ausführung der Erfindung in Verbindung mit der Figur 2, bei der der Fügepartner als Metallplatte 1 ausgebildet ist, die beidseits stiftförmige Ankerelemente 3 mit endseitigen Verdickungen 3a aufweist. Bei dieser Ausführung sind sowohl die Metallplatte 1 als auch die Stiftbereiche der Ankerelemente 3 und teilweise deren Verdickungen 3a als erster Teilbereich zu bezeichnen, der integraler Bestandteil des Bauteiles wird. Die Platte 1 ist hier bevorzugt mittig in einem Faserelement 2 angeordnet, das z.B. durch zwei Fasergewebe gebildet werden kann, die beidseits der Platte über die Ankerelemente 3 gedrückt wurden.

Die Ankerelemente 3 haben eine jeweilige Länge, dass deren Verdickungen zumindest teilweise aus der Oberfläche des Faserelementes herausragen. Durch Tränkung mit Matrixmaterial kann wiederum der Fügepartner in das Bauteil integriert werden. Die beidseitigen herausragenden Verdickungen können als Buckel zum Widerstandsschweißen fungieren.

Ein Metallbauteil 4 kann hiernach problemlos jederzeit, z.B. durch Widerstandsbuckelschweißen an die nach außen weisenden balligen Verdickungen angeschweißt werden, insbesondere auf beiden Seiten.

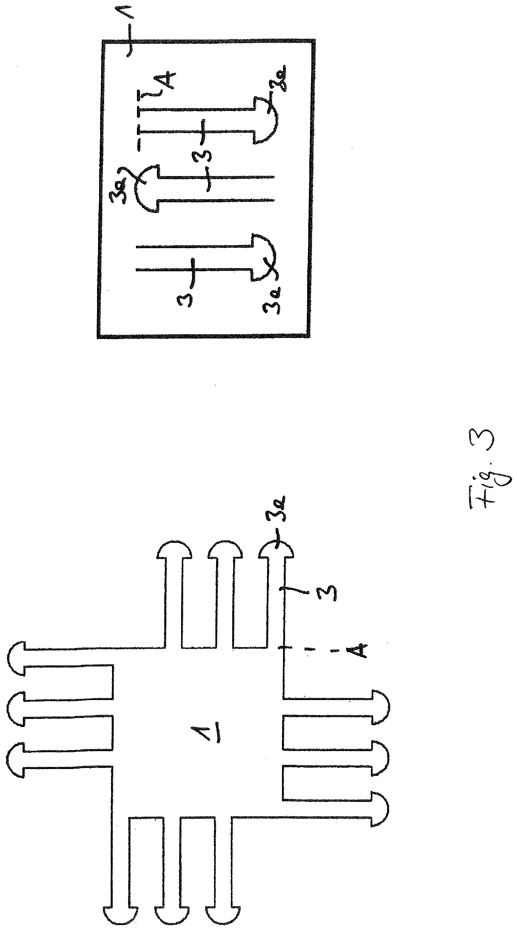

Figur 3 zeigt einen Fügepartner in der Form einer Platte 1, bei welcher durch Stanzen oder Schneiden, z.B. Laserschneiden die Kontur eines jeweiligen Ankerelementes 3 nebst Verdickung 3 definiert wird. Durch ein Biegen der konturierten Ankerelemente 3 um eine in der Plattenebene liegenden Achse A können die Ankerelemente von der Plattenoberfläche vorspringend ausgebildet werden, so dass die Platte 1 mit diesen in ein Faserelement eingesteckt werden kann.

Nach der Verbindung der Drahtgewebe 1 untereinander und bevorzugt auch mit den Fasern des Faserelementes 2 kann die Tränkung mit der Kunststoffmatrix, z.B. Epoxidharz erfolgen, die auch an die Drahtgewebe anbindet. Diese bilden hiernach einen integralen Bestandteil des fertigen faserverstärkten Kunststoffbauteiles und können als Fügepartner dienen, an die ein Metallbauteil angeschweißt werden kann, bevorzugt durch Widerstandsbuckelschweißen, da die vom Faserelement 2 wegweisenden überspringenden Drähte der Drahtgewebe 1 als Schweißbuckel genutzt werden können. Die zum Faserelement weisenden überspringenden Drähte bilden somit im Sinne der allgemeinen Erfindungsbeschreibung den ersten Teilbereich des Fügepartner, der in das Bauteil integriert wird und die von Faserelement weg- und zum späteren Metallbauteil hinweisenden überspringenden Drähte den zweiten Teilbereich, an den das Metallbauteil angeschweißt werden kann.

Die Figur 2 zeigt eine alternative Ausbildung, bei der der Fügepartner als Metallplatte 1 ausgebildet ist und diese Metallplatte auf der zum Faserelement 2 weisenden Fläche eine Vielzahl von stiftförmigen Ankerelementen 3 aufweist. Diese Ankerelemente 3 haben eine Länge, die geringer ist als die Dicke D des Faserelementes 2, so dass die endseitigen Verdickungen 3a in Dickenrichtung nicht durch das Faserelement 2 hindurchreichen, also im Faserelement 2 liegen. Alleinig schon durch die Verdickungen ist die Metallplatte 1 am Faserelement 2 befestigt.

Das Einstecken der Metallplatte 1 in das Faserelement kann vor oder auch nach dem Tränken jedoch vor Aushärtung des Matrixmaterial erfolgen, insbesondere so, dass die hier obere Oberfläche 1b über der Oberfläche 2b des Faserelementes liegt und nicht vom Matrixmaterial überdeckt wird. Diese Fläche 1b kann somit als "Schweißinsel" innerhalb des Verbundbauteiles genutzt werden um daran ein Metallbauteil 4 z.B. durch einseitiges Widerstands(buckel)schweißen, Laserstrahlschweißen oder sonstige Schweißmethoden anzubinden. Bei Anwendung des Widerstandsbuckelschweißens können als Schweißbuckel natürliche, geprägte oder massive Buckel in Frage kommen.

Figur 3 zeigt eine weitere Ausführung in Verbindung mit der Figur 4, bei der der Fügepartner als Metallplatte 1 ausgebildet ist, die beidseits stiftförmige Ankerelemente 3 mit endseitigen Verdickungen 3a aufweist. Bei dieser Ausführung sind sowohl die Metallplatte 1 als auch die Stiftbereiche der Ankerelemente 3 und teilweise deren Verdickungen 3a als erster Teilbereich zu bezeichnen, der integraler Bestandteil des Bauteiles wird. Die Platte 1 ist hier bevorzugt mittig in einem Faserelement 2 angeordnet, das z.B. durch zwei Fasergewebe gebildet werden kann, die beidseits der Platte über die Ankerelemente 3 gedrückt wurden.

Die Ankerelemente 3 haben eine jeweilige Länge, dass deren Verdickungen zumindest teilweise aus der Oberfläche des Faserelementes herausragen. Durch Tränkung mit Matrixmaterial kann wiederum der Fügepartner in das Bauteil integriert werden. Die beidseitigen herausragenden Verdickungen können als Buckel zum Widerstandsschweißen fungieren.

Ein Metallbauteil 4 kann hiernach problemlos jederzeit, z.B. durch Widerstandsbuckelschweißen an die nach außen weisenden balligen Verdickungen angeschweißt werden, insbesondere auf beiden Seiten.

Figur 5 zeigt einen Fügepartner in der Form einer Platte 1, bei welcher durch Stanzen oder Schneiden, z.B. Laserschneiden die Kontur eines jeweiligen Ankerelementes 3 nebst Verdickung 3 definiert wird. Durch ein Biegen der konturierten Ankerelemente 3 um eine in der Plattenebene liegenden Achse A können die Ankerelemente von der Plattenoberfläche vorspringend ausgebildet werden, so dass die Platte 1 mit diesen in ein Faserelement eingesteckt werden kann.

## Patentansprüche

1. Verfahren zur Herstellung eines für das Anschweißen eines Metallbauteils (4) vorbereiteten Bauteils (1,2) aus faserverstärktem Kunststoff, welches wenigstens ein mit einer Kunststoffmatrix getränktes Faserelement (2) umfasst, wobei
a. wenigstens ein metallischer Fügepartner (1) in ein Faserelement (2) zumindest bereichsweise integriert wird, wobei ein erster Teilbereich des Fügepartners (1) von den Fasern des Faserelementes (2) kontaktierend umgeben wird und ein zweiter Teilbereich des Fügepartners (1) über eine Oberfläche des Faserelementes (2) übersteht oder zumindest in der Oberfläche liegt und
b. der Fügepartner (1) an die flüssige und erhärtende Kunststoffmatrix zumindest mit dem ersten Teilbereich angebunden wird,
**dadurch gekennzeichnet, dass**
c. der Fügepartner (1) durch ein flächiges Metallelement gebildet wird, das auf wenigstens einer Seite von der Fläche vorspringende stiftförmige Ankerelemente (3) mit einer endseitigen Verdickung (3a) aufweist und zumindest die Ankerelemente (3) den ersten Teilbereich des Fügepartners (1) bilden und in das Faserelement (2) integriert werden und
d. die freien Ankerenden durch die Dicke des Faserelementes hindurchreichen und auf dessen anderen Seite über die Oberfläche vorstehen der zumindest in dieser enden und die Verdickungen den zweiten Teilbereich bilden, an dem ein Metallbauteil durch Schweißen anfügbar ist.

2. Verfahren nach Anspruch 1, **dadurch gekennzeichnet, dass** der flächige Teil des Fügepartners (1) in das Faserelement integriert wird und hierbei beidseitig von Fasern kontaktierend umgeben wird, und sich die Ankerelemente (3) in Dickenrichtung vom flächigen Teil in die Richtung zur Oberfläche des Faserelementes (2) erstrecken und in oder über der Oberfläche enden und die freien Ankerelement-Enden den zweiten Teilbereich ausbilden.

3. Verfahren nach Anspruch 2, **dadurch gekennzeichnet, dass** der flächige Teil des Fügepartners (1) eine Metallplatte ausbildet, die beidseits stiftförmige Ankerelemente (3) mit endseitigen Verdickungen (3a) aufweist und sowohl die Metallplatte als auch die Stiftbereiche der Ankerelemente (3) und teilweise deren Verdickungen (3a) als erster Teilbereich in das Faserelement integriert werden und die beidseitig herausragenden Verdickungen als Buckel zum Widerstandschweißen fungieren.

4. Verfahren nach Anspruch 2 oder 3, **dadurch gekennzeichnet, dass** der flächige Teil des Fügepartners (1) mittig bezogen auf die Dicke des Faserelementes (2) angeordnet wird

5. Verfahren nach einem der vorherigen Ansprüche, **dadurch gekennzeichnet, dass** ein insbesondere ungetränktes Faserelement (2) beidseitig von zwei Fügepartnern (1) eingeschlossen wird und die beiden Fügepartner (1) durch die Dicke des Faserelementes (2) hindurch miteinander in Kontakt gebracht werden und insbesondere vor dem Tränken verbunden werden, insbesondere durch Widerstandsschweißen.

6. Verfahren nach einem der vorherigen Ansprüche, **dadurch gekennzeichnet, dass** ein Metallbauteil durch Schweißen an die Verdickungen der Ankerelemente angefügt wird.

7. Verwendung eines flächigen Metallelementes (1), das auf wenigstens einer Seite von der Fläche vorspringende stiftförmige Ankerelemente (3) mit einer endseitigen Verdickung (3a) aufweist als metallischer Fügepartner zur Integration in ein Bauteil aus faserverstärktem Kunststoff zum Zweck des Anschweißens eines Metallbauteiles (4) hieran, wobei zumindest die Ankerelemente (3) einen ersten Teilbereich des Fügepartners (1) bilden, der in ein Faserelement integrierbar ist, und die Verdickungen Schweißbuckel zum Anschweißen eines Metallbauteils durch Widerstandsschweißen bilden, die nach außen auf das Metallbauteil zu ballig oder zumindest verjüngend ausgebildet sind.

8. Verwendung nach Anspruch 7, **dadurch gekennzeichnet, dass** das flächige Metallelement auf beiden Seiten von der Fläche vorspringende stiftförmige Ankerelemente (3) mit einer endseitigen Verdickung (3a) aufweist.

## Claims

1. Method for producing a component (1, 2) of fibre-reinforced plastic, which is prepared for the welding on of a metal component (4) and comprises at least one fibre element (2) impregnated with a polymer matrix, wherein
a. at least some regions of at least one metallic piece to be joined (1) are integrated into a fibre element (2), a first section of the piece to be joined (1) being surrounded in a contacting manner by the fibres of the fibre element (2) and a second section of the piece to be joined (1) projecting beyond a surface of the fibre element (2) or at least lying in the surface,
b. the piece to be joined (1) is bonded, at least by the first section, onto the liquid and hardening polymer matrix,
**characterized in that**
c. the piece to be joined (1) is formed by a sheet-like metal element, which has on at least one side pin-shaped anchor elements (3) that project from the surface and have an end thickening (3a), and at least the anchor elements (3) form the first section of the piece to be joined (1) and are integrated into the fibre element (2), and
d. the free ends of the anchors reach through the thickness of the fibre element and, on the other side thereof, project beyond the surface, or at least end in the latter, and the thickenings form the second section, onto which a metal component can be joined by welding.

2. Method according to Claim 1, **characterized in that** the sheet-like part of the piece to be joined (1) is integrated into the fibre element and is thereby surrounded on both sides in a contacting manner by fibres, and the anchor elements (3) extend in the direction of the thickness from the sheet-like part in the direction of the surface of the fibre element (2) and end in or beyond the surface and the free ends of the anchor elements form the second section.

3. Method according to Claim 2, **characterized in that** the sheet-like part of the piece to be joined (1) forms a metal plate, which has on both sides pin-shaped anchor elements (3) with end thickenings (3a) and both the metal plate and the pin regions of the anchor elements (3), and partly the thickenings (3a) thereof, are integrated into the fibre element as the first section and the thickenings that project on both sides act as projections for resistance welding.

4. Method according to Claim 2 or 3, **characterized in that** the sheet-like part of the piece to be joined (1) is arranged centrally with respect to the thickness of the fibre element (2).

5. Method according to one of the preceding claims, **characterized in that** a fibre element (2), in particular an unimpregnated fibre element (2), is enclosed on both sides by two pieces to be joined (1) and the two pieces to be joined (1) are brought into contact with one another through the thickness of the fibre element (2) and are connected, in particular by resistance welding, in particular before the impregnation.

6. Method according to one of the preceding claims, **characterized in that** a metal component is joined onto the thickenings of the anchor elements by welding.

7. Use of a sheet-like metal element (1), which has on at least one side pin-shaped anchor elements (3) that project from the surface and have an end thickening (3a) as a metallic piece to be joined, for integration into a component of fibre-reinforced plastic for the purpose of welding a metal component (4) thereto, at least the anchor elements (3) forming a first section of the piece to be joined (1), which can be integrated into a fibre element, and the thickenings forming welding projections for the welding on of a metal component by resistance welding, which are formed convexly or at least tapering outwardly towards the metal component.

8. Use according to Claim 7, **characterized in that** the sheet-like metal element has on both sides pin-shaped anchor elements (3) that project from the surface and have an end thickening (3a).

## Revendications

1. Procédé de fabrication d'un composant (1, 2) en matière plastique renforcée de fibres préparé pour le soudage d'un composant métallique (4), qui comprend au moins un élément fibreux (2) imprégné avec une matrice de matière plastique,
a. au moins un partenaire d'assemblage métallique (1) étant intégré au moins en zones dans un élément fibreux (2), une première zone partielle du partenaire d'assemblage (1) étant entourée avec contact par les fibres de l'élément fibreux (2) et une deuxième zone partielle du partenaire d'assemblage (1) dépassant au-dessus d'une surface de l'élément fibreux (2) ou étant située au moins dans la surface et
b. le partenaire d'assemblage (1) étant relié à la matrice de matière plastique liquide et durcissante au moins avec la première zone partielle,
**caractérisé en ce que**
c. le partenaire d'assemblage (1) est formé par un élément métallique plat, qui comprend sur au moins un côté des éléments d'ancrage (3) en forme de tige surplombants à partir de la surface avec un épaississement (3a) du côté de l'extrémité, et au moins les éléments d'ancrage (3) forment la première zone partielle du partenaire d'assemblage (1) et sont intégrés dans l'élément fibreux (2) et
d. les extrémités d'ancrage libres traversent l'épaisseur de l'élément fibreux et font saillie sur son autre côté au-dessus de la surface ou au moins finissent dans celle-ci et les épaississements forment la deuxième zone partielle, à laquelle un composant métallique peut être assemblé par soudage.

2. Procédé selon la revendication 1, **caractérisé en ce que** la partie plate du partenaire d'assemblage (1) est intégrée dans l'élément fibreux et y est entourée avec contact des deux côtés par des fibres, et les éléments d'ancrage (3) s'étendent dans la direction d'épaisseur depuis la partie plate dans la direction de la surface de l'élément fibreux (2) et finissent dans ou au-dessus de la surface et les extrémités des éléments d'ancrage libres forment la deuxième zone partielle.

3. Procédé selon la revendication 2, **caractérisé en ce que** la partie plate du partenaire d'assemblage (1) forme une plaque métallique, qui comprend des deux côtés des éléments d'ancrage (3) en forme de tige avec des épaississements (3a) du côté de l'extrémité et aussi bien la plaque métallique que les zones de tige des éléments d'ancrage (3) et en partie leurs épaississements (3a) sont intégrés dans l'élément fibreux en tant que première zone partielle et les épaississements ressortant des deux côtés servent de bosses pour le soudage par résistance.

4. Procédé selon la revendication 2 ou 3, **caractérisé en ce que** la partie plate du partenaire d'assemblage (1) est agencée au milieu par rapport à l'épaisseur de l'élément fibreux (2).

5. Procédé selon l'une quelconque des revendications précédentes, **caractérisé en ce qu'un** élément fibreux (2) notamment non imprégné est enfermé des deux côtés par deux partenaires d'assemblage (1) et les deux partenaires d'assemblage (1) sont mis en contact l'un avec l'autre au travers de l'épaisseur de l'élément fibreux (2) et notamment reliés avant l'imprégnation, notamment par soudage par résistance.

6. Procédé selon l'une quelconque des revendications précédentes, **caractérisé en ce qu'**un composant métallique est assemblé par soudage sur les épaississements des éléments d'ancrage.

7. Utilisation d'un élément métallique plat (1), qui comprend sur au moins un côté des éléments d'ancrage (3) en forme de tige surplombants à partir de la surface avec un épaississement (3a) du côté de l'extrémité en tant que partenaire d'assemblage métallique pour l'intégration dans un composant en matière plastique renforcée de fibres aux fins de la soudure d'un composant métallique (4) sur celui-ci, au moins les éléments d'ancrage (3) formant une première zone partielle du partenaire d'assemblage (1), qui est intégrable dans un élément fibreux, et les épaississements formant des bosses de soudage pour le soudage d'un composant métallique par soudage par résistance, qui sont formées vers l'extérieur sur le composant métallique sous forme bombée ou au moins effilée.

8. Utilisation selon la revendication 7, **caractérisée en ce que** l'élément métallique plat comprend sur les deux côtés des éléments d'ancrage (3) en forme de tige surplombants à partir de la surface avec un épaississement (3a) du côté de l'extrémité.
